# EUROPEAN PATENT SPECIFICATION

(11) **EP 3 311 431 B1**
(45) Date of publication and mention of the grant of the patent: **05.08.2020**
(21) Application number: 16725162.8
(22) Date of filing: 27.05.2016
(51) Int. Cl.: H01M 2/02, H01M 2/04, H01M 10/04, H01M 10/42

(54) **STACKABLE CELL AND BATTERY MODULE INCLUDING SAME**
STAPELBARE ZELLE UND BATTERIEMODUL DAMIT
CELLULE APTE À ÊTRE EMPILÉE ET MODULE DE BATTERIE LA COMPRENANT

(30) Priority: 17.06.2015 US 201562180821 P
(43) Date of publication of application: 25.04.2018
(73) Proprietor: Robert Bosch GmbH, 70442 Stuttgart (DE)
(72) Inventor: ADONAKIS, Nick, West Bloomfield, Michigan 48322 (US); KOCH, Robert, Troy, Michigan 48083 (US)
(86) International application number: PCT/EP2016/062025
(87) International publication number: WO 2016/202556

(56) References cited:
- WO-A1-2012/031346
- US-A- 5 677 078
- US-A1- 2003 190 520
- US-A1- 2014 141 308
- US-A1- 2015 132 636

## Description

### BACKGROUND

### 1. Field of the Invention

The present application relates to batteries and modules including electrically interconnected batteries, and in particular, to lithium (e.g., lithium-ion, lithium-polymer, etc.) batteries and modules including same.

### 2. Description of the Related Art

Batteries provide power for various technologies ranging from portable electronics to renewable power systems and environmentally friendly vehicles. For example, hybrid electric vehicles (HEV) use a battery and an electric motor in conjunction with a combustion engine to increase fuel efficiency. Although nickel metal hydride (Ni-MH) batteries are commonly used for HEV applications, lithium-ion (Li-ion) batteries are increasingly used in HEV applications since they provide roughly twice the power and energy density of a Ni-MH battery.

Lithium-ion batteries, also referred to as cells, are sometimes provided in a housing having a cylindrical or prismatic (rectangular) shape. Alternatively, such batteries may be in the form of a so-called pouch cell.

Regardless of shape, the cell may include electrodes (for example, a positive electrode, a negative electrode and an intermediate separator provided in a stacked arrangement) that are rolled in the form of a so-called jelly roll and are placed in the housing along with the electrolyte, giving rise to a cylindrical or a prismatic cell.

The pouch cell can be constructed using electrodes that are rolled in the form of a jelly roll or are stacked depending on the strength of the current that is drawn out of the electrochemical chemical system (i.e. the electrodes).

To construct an electrical system, multiple cylindrical or the prismatic cells are arranged such that the cells are connected electrically in series or in parallel. In many applications, the arrangement is required to provide a compact battery system that maximizes the energy (KWh) with respect to weight and volume of the entire battery system.

US 5 677 078 A relates to a method and apparatus for assembling electrochemical cell using elastomeric sleeve. US 2003/190520 A1 relates to wound bipolar lithium polymer batteries. US 2015/132636 A1 relates to a rechargeable battery capable of preventing rust generation at an opening side of a battery case.

### SUMMARY

The invention is defined by the appended claims. In some aspects, an electrochemical cell, for example a lithium-ion electrochemical cell, is provided that includes an electrically conductive container including a bottom, and a sidewall surrounding a periphery of the bottom. Each cell includes an electrically conductive cell cover configured to close an open end of the container, an insulating gasket disposed between the container and the cell cover and an electrically conductive jelly roll electrode set disposed in the container. The cell cover is formed having a recess configured to receive the bottom of an adjacent cell. In particular, the recess is configured to conform to the shape and size of the bottom of the adjacent cell so that when the cells are stacked end-to-end, a cell stack is formed in which the cells of the stack a) fit within each other in a nested arrangement, and b) form an electrical connection.

The cell housings are electrically conductive and include an positive portion at one end and a negative portion at the opposed end, by nesting the cells to form a stack, a direct serial electrical connection is formed between adjacent cell housings of the stack without requiring separate terminals to form the connection. Moreover, the nested configuration helps to maintain the electrical connection between adjacent cells, and provides lateral and rotational stability to the stack of cells.

In addition, the electrochemical cell housing including the container and the cell cover are formed having an elliptical peripheral shape. Advantageously, employing an elliptical cell geometry in combination with the design of the battery electrodes allows the electrodes to swell along the circumference. The ability to swell is beneficial since the active materials of the battery cell expand during cycling (e.g., during battery discharge and recharge). Although the cyclic change in the electrode structure for the most part is not disadvantageous to the cell, in some cell configurations a counter force is applied to the cells by the supporting battery module that counterbalances swelling of the active material. In some cases, the counter force can harm the cell and result in sudden death of some or all cells in a battery module.

The elliptical electrode geometry is conceived in a manner that allows the swelling or the bulging to take place in a radial manner thereby exerting force on the circumference. In addition, the elliptical cell, as a result of the major and the minor axes, results in differential frictional forces inside the cell allowing the cell to swell and rotate. Although the ellipse along the circumference may preferentially tend to become circular, the initial elliptical shape of the cell allows swelling to take place while it is arranged in a modular form and cells do not suffer a sudden death.

This can be compared to the effect of electrode swelling in some conventional housing geometries. For example, in a circular cell, the electrodes are rolled and positioned inside the cylindrical cavity. Due to the circular shape of the cell housing, the jelly roll is generally uniformly pressed against the cylindrical wall. During swelling, the innermost part of the cylindrical jelly roll pushes itself inwards (into the inner core of the cylindrical cell), whereas the outer layers remain pressed against the cylindrical walls. The cylindrical cell, as a result of its symmetry, can generate symmetrical forces inside the cell and therefore movement of the jelly roll inside the cell is restrictive. The counter force exerted by the cylindrical walls can subject the electrode roll (or jelly roll) to a pressure that destroys the electrode resulting in cell death. Thus, cylindrical cells may be in a highly pressed state during electrode expansion, and consequently their lifetimes may be shorter than cells having other geometries.

One difference between the elliptical cell and the circular cell is therefore characterized by the fact that major and the minor axes of the elliptical cell applies fewer constraints on the jelly roll compared to the case of the fixed diameter in case of a circular cell.

Moreover, in some embodiments, due to a slight mismatch in the elliptical shape or proportions of the jelly roll and the cell housing, a small spacing exists between the jelly roll and some portions of the elliptical casing, allowing further expansion of the jelly roll. This reduces the negative effects of swelling, and thus helps to optimize cell life.

In addition to permitting swelling without suffering cell death, the elliptical shape of the cell also provides increased cell efficiency compared to some cells having conventional cell shapes. For example, when compared to a prismatic cell, in which the corners remain unutilized, the elliptical cell allows more volume utilization giving rise to almost a 30% volume efficiency. In addition, the prismatic cell may have disadvantages similar to those of the circular cell. For example, in some cases, the electrodes can be highly pressed against the walls of the prismatic housing or in a battery system (module) during expansion, whereby and the housing exerts a compression force in the cell that can be detrimental to cell function.

Moreover, the nature of stacking of the elliptical cells in a module provides a lower profile module housing than modules of cylindrical cells of the same diameter. In addition, the elliptical shape of the cells results in a relatively large space in between the modules. The latter feature circumvents the disadvantage of the prismatic cell, which as result of a close-pack structure in a prismatic module requires additional hardware components, such as spring actions and other restraining means so that no structural change in the module takes place.

Advantageously, the elliptical cell provides an improvement in volumetric efficiency of 87 percent relative to a prismatic cell, and an improvement in battery module volumetric efficiency of 70 percent relative to a battery module including the same number of prismatic cells.

The elliptical shape of the cell helps to suppress the negative effects of swelling and provides improved structural integrity, which in turn reduces noise, vibration and harshness (NVH) within a vehicle using the cells and modules, and increases cell lifetime.

The nesting capability of the cells has the effect that minimum additional structural support is required within the battery module. The nesting feature when combined with providing an electrically conductive cell housing, reduces the number and complexity of the geometry of the electric terminals in the battery module.

In some aspects, a battery module comprising electrochemical cells is provided. Each electrochemical cell includes an electrically-conductive cell housing having a container portion having an open end, and a cell cover portion that is secured to the container portion in such a way as to close the open end. In addition, each electrochemical cell includes an electrically isolating member disposed between the cell cover portion and the container portion, and an electrically-conductive jelly roll disposed in the cell housing, the jelly roll arranged such that a first electrode of the jelly roll is electrically connected to the container portion, and second electrode of the jelly roll is electrically connected to the cell cover portion. A first end of the cell housing of one of the electrochemical cells defines a recess configured to receive a second end of the cell housing of an adjacent one of the electrochemical cells. The second end of the cell housing of the adjacent one of the electrochemical cells is received within the recess of the cell housing of the one of the electrochemical cells whereby the housings of the one of the electrochemical cells and the adjacent one of the electrochemical cells a) fit within each other in a nested arrangement in which the respective cell housings are stacked end to end, and b) form an electrical connection.

The battery module may include one or more of the following features: The recess is formed in the cell cover portion. The recess conforms to the size and shape of the second end of the cell housing. The container portion includes a closed end spaced apart from the cell cover, and the closed end and the cell cover each have an elliptical peripheral shape. The battery module includes a module base configured to support a stack of electrochemical cells, wherein the electrochemical cells have an elliptical shape that defines a major axis and a minor axis, and the electrochemical cells are arranged within the module base such that the major axis of each cell is parallel to a bottom support surface of the module base. The module base supports a first stack of electrochemical cells and a second stack of electrochemical cells arranged within the module base such that the major axis of each cell is parallel to a bottom support surface of the module base, and the first stack of electrochemical cells is parallel to the second stack of electrochemical cells. The battery module includes a flex sheet having a first portion that overlies a portion of the cells of the first stack and a second portion that overlies a portion of the cells of the second stack. The first portion and the second portion comprise a curved shape that conforms the shape of the portion of the cells of the respective stack. The flex sheet includes a first portion that overlies a portion of the cells of the first stack and a second portion that overlies a portion of the cells of the second stack, the first portion and the second portion comprising a curved shape that conforms the shape of the portion of the cells of the respective stack. The flex sheet includes an electrically conductive path that electrically connects an outer-most cell of the first stack to an outer-most cell of the second stack whereby the first stack is serially connected to the second stack. The flex sheet includes cell sensors arranged to detect properties of the cells, and electrically conductuctive paths that connect the cell sensors to a control unit that monitors an output of the cell sensors. The flex sheet includes a first portion defining a first cuved portion that overlies a portion of the cells of the first stack and conforms the shape of the portion of the cells of the first stack, a second portion defining a second curved portion that overlies a portion of the cells of the second stack and conforms the shape of the portion of the cells of the first stack, and an intermediate portion that joins the first portion to the second portion, the intermediate portion defining an elonated V-shaped channel that extends parallel to the first stack.

In some aspects, an electrochemical cell is provided. The electrochemical cell includes an electrically-conductive container including a bottom, and a sidewall connected to, and surrounding a periphery of, the bottom, the sidewall extending at an angle from the bottom. The electrochemical cell includes an electrically-conductive cell cover, the cell cover configured to close an open end of the container, and an insulating gasket disposed between the container and the cell cover. In addition, the electrochemical cell includes an electrically-conductive jelly roll disposed in the container, a first electrode of the jelly roll electrically connected to the container and a second electrode of the jelly roll electrically connected to the cell cover. One of the bottom and the cell cover is formed having a recess, the recess configured to receive the other of the bottom and the cell cover of another electrochemical cell, and conform to the shape and size of the other of the bottom and the cell cover of the another electrochemical cell to form a cell stack in which the electrochemical cells of the stack a) fit within each other in a nested arrangement, and b) form an electrical connection.

The electrochemical cell may include one or more of the following features: The cell cover is formed having a recess, the recess configured to receive the bottom of the another electrochemical cell and to conform to the size and shape of the bottom of the another electrochemical cell. The jelly roll comprises material strips including a first insulating strip, a second insulating strip, the first electrode disposed between the first insulating strip and the second insulating strip, and the second electrode disposed between the second insulating strip and a third insulating strip, the material strips arranged in a stacked configuration and then rolled to form a roll having multiple turns and an elliptical shape. The first insulating strip, the second insulating strip and the third insulating strip are arranged such that a first long edge and a second long edge of each of the first insulating strip, the second insulating strip and the third insulating strip are aligned, where the first long edge is opposed to the second long edge. In addition, the first electrode is arranged so that a long edge of the first electrode is offset in a first direction relative to the first long edge of each of the first insulating strip, the second insulating strip and the third insulating strip, and the second electrode is arranged so that a long edge of the second electrode is offset in a second direction relative to the second long edge of each of the first insulating strip, the second insulating strip and the third insulating strip, where the second direction is opposed to the first direction. The electrochemical cell includes a first electrically conductive member that electrically connects the first electrode of the jelly roll to the container, and second electrically conductive member that electrically connects the second electrode of the jelly roll to the cell cover. Each of the first electrically conductive member and the second electrically conductive member is an electrically conductive plate. Each of the first electrically conductive member and the second electrically conductive member is an electrically conductive wire. The first electrode is directly welded to the container, and the second electrode is directly welded to the cell cover. The electrochemical cell includes a mandrel having an elliptical cross-sectional shape, the mandrel disposed at the center of the jelly roll. A free end of the side wall and a periphery of the cell cover are crimped together such that a protruding ridge is formed surrounds the cell cover, and the gasket is disposed between, and electrically isolates, the free end of the side wall and the periphery of the cell cover. At least one of the cell cover and the bottom include surface features that provide structural reinforcement. The surface features include an elongated, radially-extending protruding ridge. The spacing between the bottom and the cell cover defines a height of the electrochemical cell, the cell cover and the bottom each comprise a first dimension corresponding to a length of a major axis of the elliptical peripheral shape and a second dimension corresponding to a length of a minor axis of the elliptical peripheral shape, and the height of the housing is less than the length of the second dimension.

In some aspects, a method of determining the aspect ratio of a cell housing of an electrochemical cell is provided. The elecrochemical cell includes a jelly roll-type electrode assembly that is wound around winding axis. A cell height of the electrochemical cell corresponds to a dimension parallel to the winding axis and a cell maximum length of the electrochemical cell corresponds to a maximum dimension of the cell in a direction transverse to the winding axis. The method may include determining the current output requirements of the electrochemical cell, and determining the minimum aspect ratio that meets the determined current output requirements of the electrochemical cell, where the aspect ratio is defined as the ratio of a height of the cell housing to the maximum length of the cell housing.

### BRIEF DESCRIPTION OF THE DRAWINGS

Fig. 1 is a perspective view of an elliptical electrochemical cell.
Fig. 2 is an exploded view of cell housing of the cell of Fig. 1.
Fig. 3 is an exploded view of cell of the cell of Fig. 1 with the gasket omitted for clarity.
Fig. 4A is a perspective side sectional view of two cell housings in a stacked configuration in which the crimped regions of each cell housing are encircled.
Figs. 4B is an enlarged detail side sectional view of the crimped region of Fig. 4A.
Fig. 4C is an enlarged detail side sectional view of the crimped region of Fig. 4A prior to crimping.
Fig. 5 is a plan view of the cell cover.
Fig. 6 is a side sectional view of the cell cover as seen along line A-A of Fig. 5.
Fig. 7 is an enlarged schematic view of the vent illustrating a scoring pattern.
Fig. 8 is an enlarged schematic view of the vent illustrating an alternative scoring pattern.
Fig. 9 is a perspective view of the electrode set used to form the jelly roll.
Fig. 10 is a perspective view of the mandrel.
Fig. 11 is a perspective view of the electrode set wound to form the jelly roll.
Fig. 12 is an exploded perspective view of an alternative embodiment cell employing current collectors disposed between the jelly roll and the cell housing.
Fig. 13 is an enlarged detail side sectional view of the crimped region in the cell housing of Fig. 12, illustrating the gasket interposed between the current collector and the containter sidewall.
Fig. 14 is an exploded perspective view of another alternative embodiment cell.
Fig. 15 is an exploded perspective view of another alternative embodiment cell.
Fig. 16 is a perspective view of another embodiment of the current collector.
Fig. 17 is a perspective view of another embodiment of the current collector.
Fig. 18 is a perspective view of another embodiment cell with the cover omitted illustrating another embodiment of the current collector.
Fig. 19 is a perspective view of the current collector of Fig. 17 secured to a jelly roll, the current collector including a spring ribbon.
Fig. 20 is a top plan view of the cell cover with dashed lines illustrating a welding pattern.
Fig. 21 is a perspective view of a cell stack in which the cells of the stack are nested together.
Fig. 22 is a perspective view of a cell stack in which the cells of the stack are longitudinally spaced apart.
Fig. 23 is a perspective view of a battery module including the elliptical cells.
Fig. 24 is a perspective sectional view of the battery module of Fig. 23 as seen along line B-B of Fig. 23.
Fig. 25 is an exploded view of the battery module of Fig. 23.
Fig. 26 is a perspective view of an alternative battery module including the elliptical cells.
Figs. 27A-27C illustrate alternative cell housing shapes.

### DETAILED DESCRIPTION

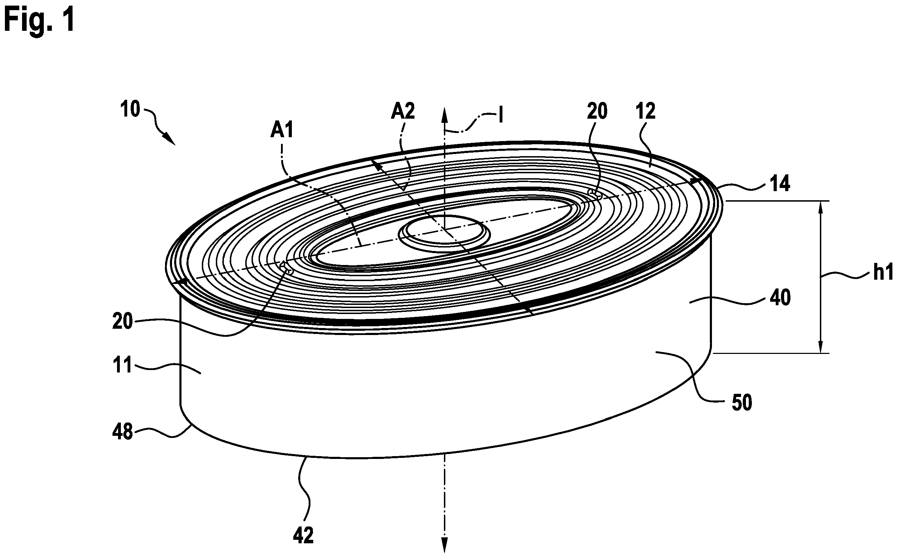

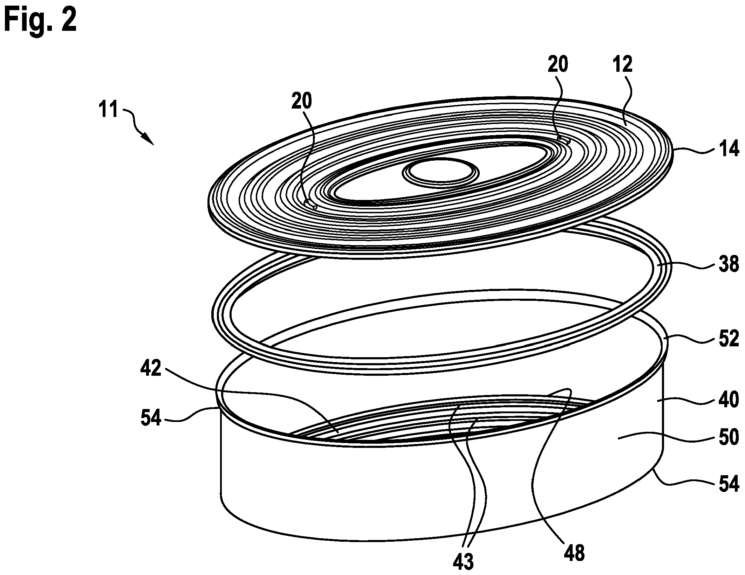

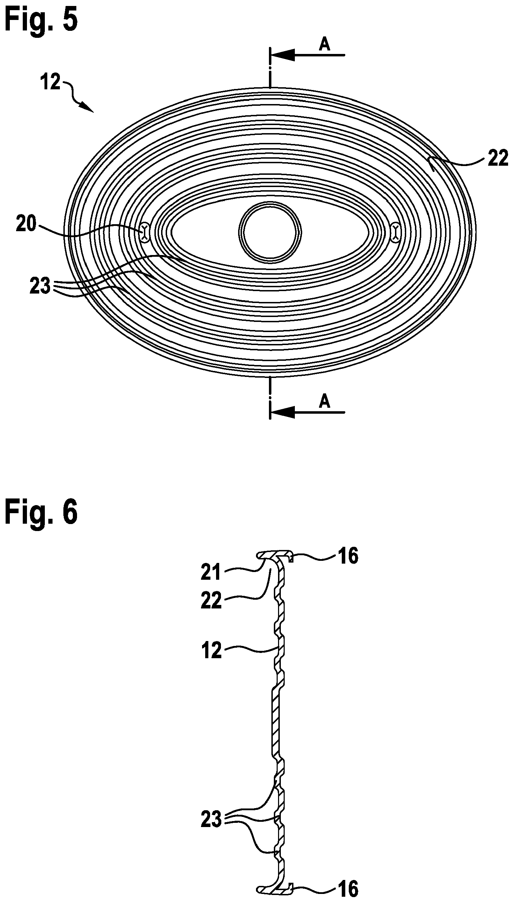

Referring to Figs. 1-8, an electrochemical cell 10, for example a lithium-ion electrochemical cell, is provided that has an elliptical peripheral shape and recess 22 formed in one end to facilitate nested stacking of multiple cells 10, as discussed further below. The cell 10 includes a cell housing 11 that receives and cooperates with a jelly roll-type electrode assembly 24 to form a power generation and storage unit. The cell housing 11 includes an electrically conductive container 40, an electrically conductive cell cover 12 configured to close an open end of the container 40, and an electrically insulating gasket 38 disposed between the container 40 and the cell cover 10. In addition, an electrolyte is disposed in the container 40 along with the jelly roll electrode assembly 24, and sealed therein via the cell cover 12 and gasket 38.

The container 40 is a generally cup-shaped member that includes a bottom 42, and a sidewall 50 connected to, and surrounding, a periphery of the bottom 42. The peripheral edge 48 of the bottom is formed having an elliptical shape that defines a major axis A1 and a minor axis A2 perpendicular to the major axis. The sidewall 50 extends normal to the bottom 42, and has a free end 52 spaced apart from the bottom 42. The sidewall 50 is rolled outward at the free end 52 to form a flange 54 that extends generally parallel to the bottom 42. The flange 54 is used to facilitate a connection with the cell cover 12, as discussed futher below. The bottom 42 includes a series of concentric circumferentially-extending ridges 43 that provide structural reinforcement.

The cell cover 12 is a generally plate-shaped member having the same profile and dimensions as the container bottom 42. Thus, in the illustrated embodiment, the cell cover peripheral edge 14 has an elliptical shape. The peripheral edge 14 includes a lip 16 that protrudes in direction toward the container 40. The lip 16 is used to connect the cell cover 12 to the container sidewall 50, as discussed below.

The cell cover 12 includes a series of concentric circumferentially-extending ridges 23 that provide structural reinforcement. In addition, in some embodiments, the ridges 23 facilitate interconnection between adjacent cells 10, 10' when multiple cells are arranged longitudinally in a stack. For example, the ridges 23 of the cell cover 12 of one cell interact with the ridges 43 of the bottom 42 the adjacent cell 10' to reduce relative lateral movement between the adjacent cells 10, 10', thus reducing fretting of the cell housing 11 as well as NVH.

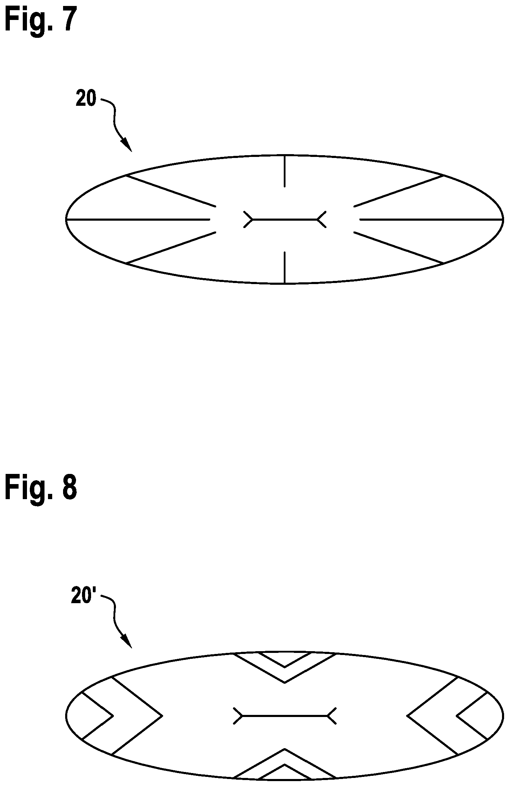

The cell cover 12 includes vents 20 to permit gas and pressure release of cell contents in the event of cell malfunction. The vents 20 are formed by providing localized weakened areas in the cell cover 12, for example by providing a localized pattern of small perforations or scoring as shown in Fig. 7 or Fig. 8. Although the vents 20 are illustrated as being formed in the cell cover 12, the vents are not limited to this location. For example, alternatively or additionally, vents may be formed in the bottom 42 and/or sidewall 50.

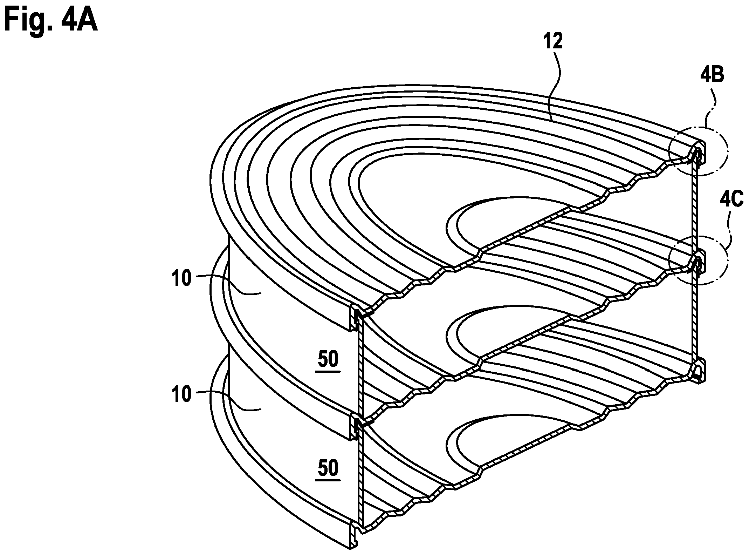

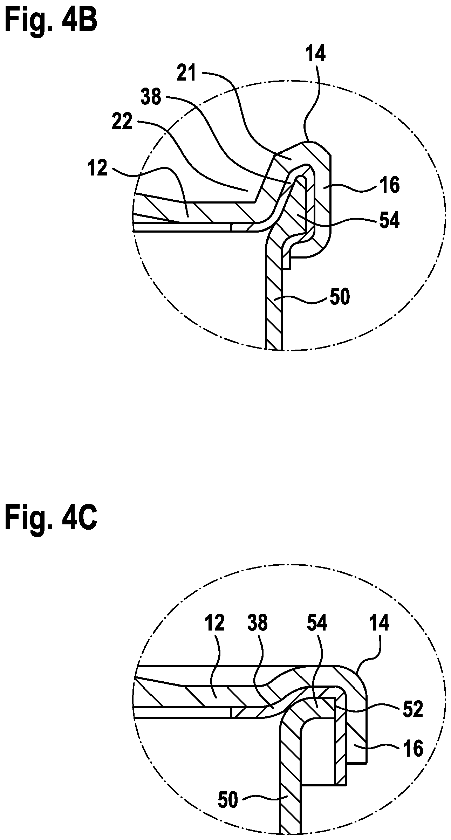

Referring to Figs. 4A-4C, the cell cover 12 is connected to the sidewall free end 52 so as to form a hermetic seal with the container 40. This is achieved by a crimping process in which the cell cover 12 is placed over the open end of the sidewall 50 with the gasket 38 disposed between the sidewall flange 54 and the cell cover peripheral edge 14 and lip 16, and then the lip 16 is crimped (e.g., folded and compressed) around the sidewall flange 54. The gasket 38 is compressedly fixed between the cell cover 12 and the sidewall 50 by the crimping process to form a hermetic seal therebetween. In addition, the gasket 38 electrically isolates the cell cover 12 from the container 40. To this end, the gasket is formed, for example, of nitrile butdiene rubber (NBR), ethylene propylene diene mnomer (EPDM), polytetrafluoroethylene (PTFE) or other suitable polymer.

When the cover 12 is connected to the sidewall 50, a rim 21, resulting from folding and compressing together the cell cover lip 16 and sidewall flange 54, surrounds the cell cover peripheral edge 14. The rim 21 provides a recess 22 in the cell cover 12 that conforms to the size and shape of the bottom 42 of the cell 10. The configuration of the cell cover 12 including the rim 21 and recess 22 provides several advantagous features: The recess 22 facilitates longitudinal stacking of multiple cells 10, where the cell (and cell stack) longitudinal axis ℓ is perpendicular to both the major axis A1 and the minor axis A2. In particular, the recess 22 is shaped and dimensioned to receive the bottom 42' of another electrochemical cell 10' in a fitted (e.g., small clearance) manner. In addition, due to the elliptical shape of the bottom 42 and cell cover 12, the rim 21 prevents adjacent cells 10, 10' of a stack of cells from relative rotation about the longitudinal axis ℓ. Still further, by providing the rim 21, the contact surface area (e.g. surface area available to form an electrical connection) between the cell cover 12 of one cell 10 and the bottom 42 of an adjacent cell 10' is increased relative to cell covers formed without a rim 21.

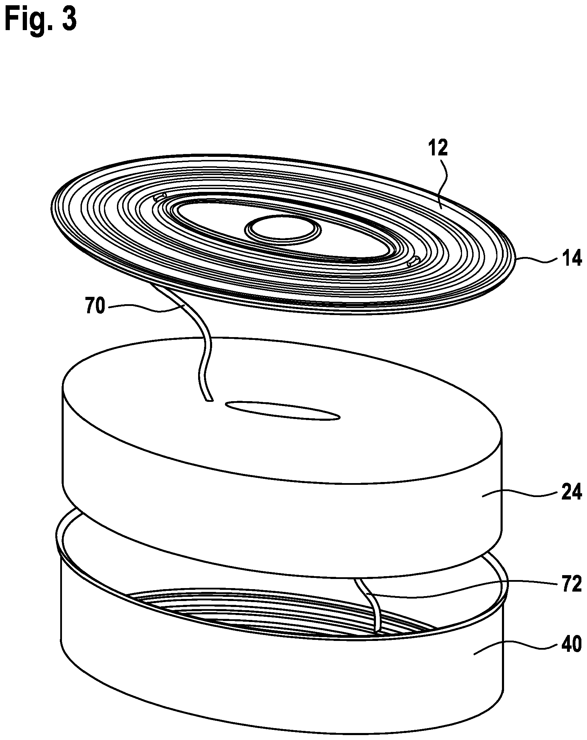

Referring to Figs. 3 and 9-11, the electrically conductive jelly roll assembly 24 is disposed in the cell housing 11 between the container 40 and the cell cover 12. The jelly roll assembly 24 is a wound spiral electrode set that includes at least one positive electrode 26, at least one negative electode 28, a first electrically insulative separator 30 disposed between the positive and negative electrodes 26, 28, a second electrically insulative separator 32 disposed on the side of the positive electrode 26 opposed to the first separator 30, and a third electrically insulative separator 34 disposed on the side of the negative electrode opposed to the first separator 30.

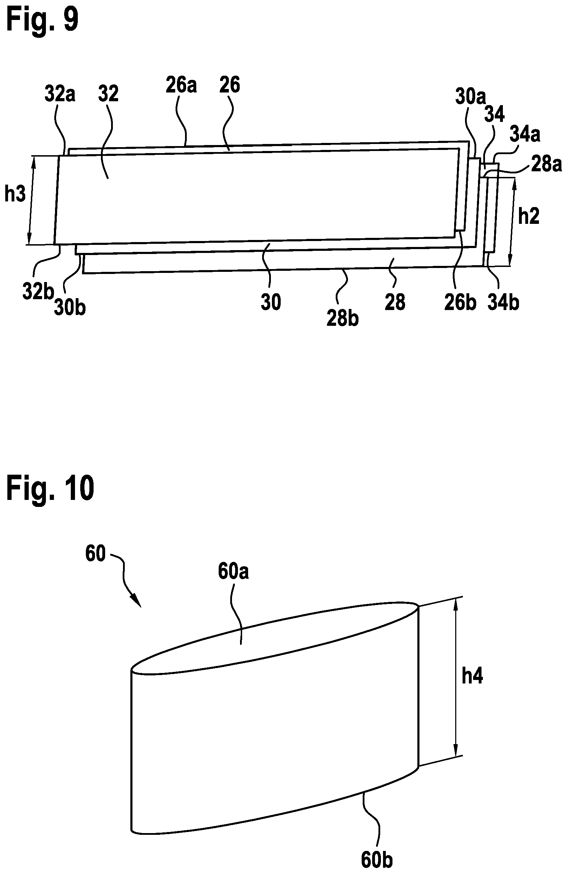

The electrodes 26, 28 and separators 30, 32, 34 are elongate strips of material that are stacked and then wound about an elliptically shaped mandrel 60 (Fig. 10) to form the elliptically shaped jelly roll assembly 24. As used herein, the term 'strip' refers to a geometry that includes a height that is large (e.g., on the order of 1000 x) relative to the thickness, and a length that is large (e.g., on the order of 1000 x) relative to the height h2. For example, in some applications, the electrodes 26, 28 may have a thickness of 0.03 mm, a height h2 of 33 mm and a length of 45 m.

The positive and negative electrodes 26, 28 may have a layered structure to facilitate insertion and/or movement of lithium-ions. In the illustrated embodiment, the positive electrode 26 is formed of copper with a graphite coating, and the negative electrode 28 is formed of aluminum with a lithiated metal oxide coating. The separators 30, 32, 34 are formed of an electrically insulating material such as a trilayer polypropylene-polyethyerlene-polypropylene membrane manufactured by Celgard LLC of Charlotte, North Carolina, USA.

The distance between the cell cover 12 and the container bottom 42 defines a container height h1. The length of the major axis A1 defines a cell maximum length Lₘₐₓ, and the length of the minor axis A2 defines a cell minimum length Lₘᵢₙ. In the illustrated embodiment, the ratio R_{lmax/lmin} of the length Lmax of the major axis A1 to the length Lmin of the minor axis is in a range of 1.25 to 1.6, but the ratio R_{lmax/lmin} is not limited to this range.

It has been determined that heat is transferred through the cell 10 in a direction parallel to the electrode winding axis. This is due at least in part to the orientation of the thermally and electrically insulative separators 30, 32, 34 that are used to separate the positive and negative electrodes 26, 28 disposed within the cell housing 11. In cells having a jelly roll electrode configuration, the separators 30, 32, 34 may tend to direct heat in a direction parallel to the winding axis which generally corresponds to the cell height direction. Computer simulations of the thermal performance of cells of various housing shapes indicate that providing the cell with a low aspect ratio is thermally advantageous. In some embodiments, the elliptical cell 10 is a low profile cell in that it has a low aspect ratio in order to provide improved heat rejection capabilities, where the aspect ratio refers to the ratio R_{h/lmax} of cell height h to cell maximum diameter lₘₐₓ. For example, the elliptical cell may have a cell height h that is less than the cell maximum diameter lₘₐₓ (e.g., the diameter of the major axis A1). In some embodiments, the ratio R_{h/lmax} is in a range of 0.17 to 0.25. However, the ratio Rh/Lmax is not limited to this range. In other embodiments, the ratio R_{h/lmax} is minimized while taking into account factors such as cell output and/or storage requirements and manufacturing practicalities.

The electrodes 26, 28 and separators 30, 32, 34 each have a first long edge 26a, 28a, 30a, 32a, 34a, an opposed second long edge 26b, 28b, 30b, 32b, 34b, and a height h that corresponds to the distance between the first long edge and the second long edge. The height h2 of the electrodes 26, 28 is less than the height h3 of the separators 30, 32, 34. In addition, the height h2 of the electrodes 26, 28 and the height h3 of the separators 30, 32, 34 are greater than the height h4 of the mandrel 60. In the illustrated embodiment, the electrode height h2 is 33 mm, the separator height is 34 mm, and the mandrel height h4 is 30 mm. Of course, the respective dimensions and proportions of the illustrated embodiment are exemplary, and actual dimensions and proportions will be determined by the requirements of the specific application.

Referring to Fig. 9, before winding, the elongate strips that form the electrodes 26, 28 and separators 30, 32, 34 are arranged in a layered or stacked configuration in the thickness direction. In the stacked configuration, the positive and negative electrodes 26, 28 are partially offset in the height direction relative to the respective separators 30, 32, 34. In particular, using the mandrel 60 as a reference position, the positive electrode 26 is arranged to overlie the mandrel 60 such that the second long edge 26b is aligned with a second long edge 60b of the mandrel 60. Due to the relative height differences between the mandrel 60 and the positive electrode 26, the postive electrode first long edge 26a is outwardly spaced apart from a first long edge 60a of the mandrel 60. The negative electrode 28 is arranged to overlie the mandrel 60 such that the first long edge 28a is aligned with the mandrel first long edge 60a. Due to the relative height differences between the mandrel 60 and the negative electrode 28, the negative electrode second long edge 28b is outwardly spaced apart from the mandrel second long edge 60b. The separators 30, 32, 34 are arranged to overlie the mandrel 60 such that a midline in the height direction of the separators 30, 32, 34 is aligned with a midline in the height direction of the mandrel 60. Due to the relative height differences between the mandrel 60 and the separators 30, 32, 34, the first long edges 30a, 32a, 34a and the second long edges 30b, 32b, 34b of the separators 30, 32, 34 are outwardly spaced apart from the respective mandrel first and second long edges 60a, 60b. In addition, due to the relative height differences between the positive electrode 26 and the separators 30, 32, 34, and the relative offset of the positive electrode 26 toward a first long edge-side of the mandrel 60, the positive electrode first long edge 26a is outwardly spaced apart from the separator first long edges 30a, 32a, 34a, and the positive electrode second long edge 26b is inwardly spaced apart from the separator second long edges 30b, 32b, 34b. Similarly, due to the relative height differences between the negative electrode 28 and the separators 30, 32, 34, and the relative offset of the negative electrode 28 toward a second long edge-side of the mandrel 60, the negative electrode first long edge 28a is inwardly spaced apart from the separator first long edges 30a, 32a, 34a, and the negative electrode second long edge 28b is outwardly spaced apart from the separator second long edges 30b, 32b, 34b.

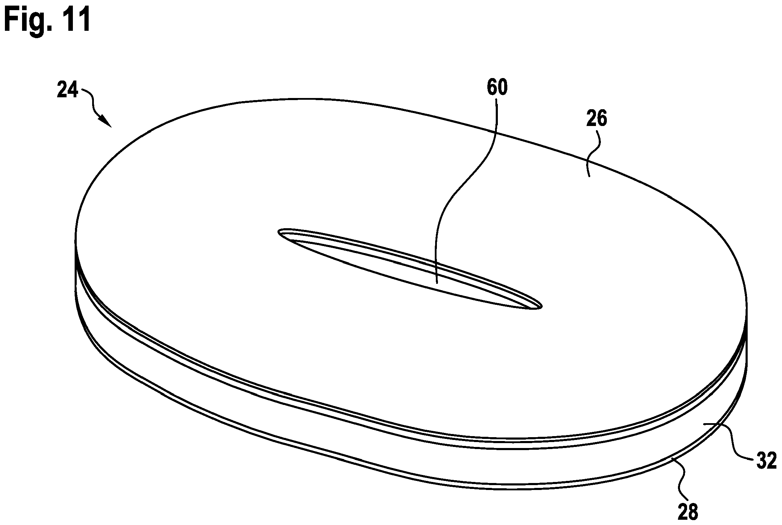

Thus, when the electrode set is in the stacked configuration, the positive electrode first long edge 26a protrudes outwardly relative to the separator first long edges 30a, 32a, 34a, and the negative electrod second long edge 28b protrudes outwardly relative to the separator second long edges 30b, 32b, 34b. The protruding portions (e.g., positive electrode first long edge 26a and negative electrode second long edge 28b) of the positive and negative electrodes 26, 28 provide exposed (bare) electrode surfaces which are used to form electrical contacts with the container 40 and cell cover 12 that form the cell housing 11. This feature is still evident when the stacked electrode set is wound around the elliptical mandrel to form the multi-turn, elliptically-shaped, wound jelly roll assembly 24 (Fig. 11).

Referring again to Fig. 3, the jelly roll assembly is electrically connected to the cell housing 11. In particular, one end of a first electrically conductive lead 70 is welded, for example via resistive welding, to the positive electrode first long edge 26a, and the opposed end of the first electrically conductive lead 70 is welded to an inner surface of the cell cover 12, whereby an electrical connection is provided between the positive electrode 26 and the cell cover 12. Similarly, one end of a second electrically conductive lead 72 is welded to the negative electrode second long edge 28b, and the opposed end of the second electrically conductive lead 72 is welded to an inner surface of the container bottom 42, whereby an electrical connection is provided between the negative electrode 28 and the container 40.

Before use, the cell housing 11 is filled with a liquid electrolyte, which seeps into and occupies the pores within the electrodes 26, 28 and separators 30, 32, 34. Some cells employ a gel electrolyte, which is impregnated into the electrodes and separator before cell assembly. These lithium polymer cells operate on the same principles as their liquid electrolyte Li-ion counterparts.

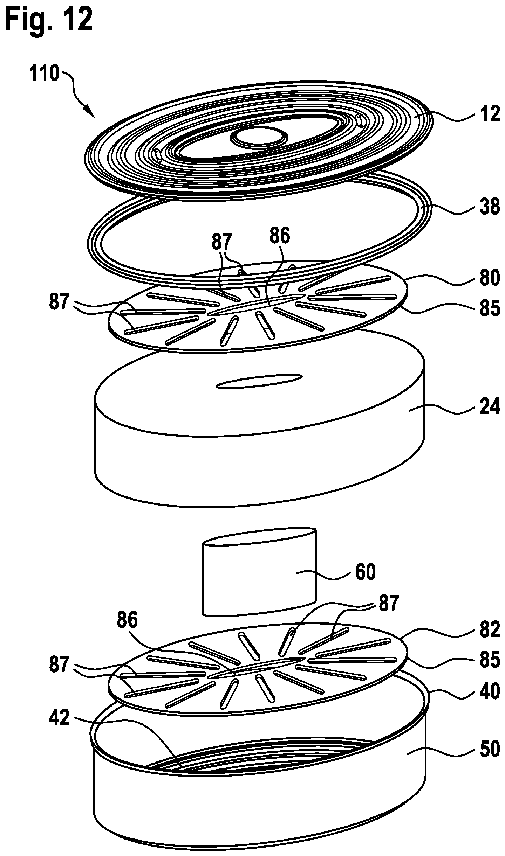

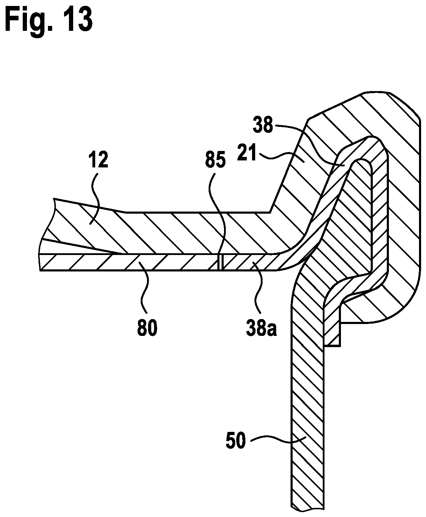

Referring to Figs. 12 and 13, an alternative elliptical cell 110 is substantially similar to the cell 10 described above with respect to Figs. 1-11, whereby common reference numbers are used to refer to common elements, and the description of common elements will not be repeated. The elliptical cell 110 differs from the previous embodiment in the way the jelly roll assembly is electrically connected to the cell housing 11. In particular, the cell 110 omits the electrically conductive leads 70, 72, and instead uses a first current collector 80 disposed between positive electrode 26 and the cell cover 12 to electrically connect the jelly roll assembly 24 to the cell cover 12, and a second current collector 82 disposed between the negative electrode 28 and the containter bottom 42 to electrically connect the jelly roll assembly 24 to the container 40. The first and second current collectors 80, 82 are identical in shape and size, so only the first current collector 80 will be described.

The first current collector 80 is a thin, flat plate having an elliptical peripheral shape that generally corresponds to the peripheral shape of the jelly roll assembly 24 and container bottom 42. The first current collector 80 is dimensioned to have a major axis and minor axis length that is slightly shorter than the length of the major axis A1 and minor axis A2 of the container bottom 42, whereby there is no electrical conduction between a peripheral edge 85 of the first current collector 80 and the container sidewall 50. To ensure that there is no electrical conduction between the first current collector peripheral edge 85 and the container sidewall 50, an inner portion 38a of the gasket 38 is protrudes inward to locate the first current collector 80 at a spaced-apart location relative to the container sidewall 50, and provide elecrical insulation between the first current collector peripheral edge 85 and the container sidewall 50.

The first current collector 80 includes an elongated central slot 86 that passes through the plate thickness and extends in parallel to the major axis. In addition, the first current collector 80 includes several elongated radial slots 87 disposed between the central slot 86 and the peripheral edge 85. The radial slots 87 extend in a radial direction and are equidstantly spaced about the circumference of the central slot 86.

The first current collector 80 is formed of the same material as the electrode to which it will be connected. In the illustrated embodiment, since the first current collector 80 will be connected to the positive electrode 26, it is formed of copper.

The first current collector 80 is connected to the exposed (bare portions) of the positive electrode 26 by welding. This can be accomplished in various ways. In some embodiments, the electrical connection between the first current collector 80 and the bare first long edges 26a of the positive electrode 26 is accomplished via the radial slots 87. In particular, portions of the bare first long edges 26a of the positive electrode 26 are passed through the radial slots. Portions of the positive electrode that have passed through the radial slots 87 are welded to the current collector. For example, in some embodiments, the portions of the positive electrode that have passed through the radial slots 87 are folded over to overlie the collector outer surface (e.g., the collector surface facing the cell cover 12), and then are welded to this surface. In other embodiments, the portions of the positive electrode that have passed through the radial slots 87 are welded to the inner surface of the radial slots 87. In still other embodiments, the bare first long edges 26a of the positive electrode 26 are not passed through the radial slots. Instead, the first current collector 80 rests on the positive electrode first long edges 26a, and weld spots or lines (for example via induction welding) are performed along the first current collector surface between the radial slots 87. Similar welds are provided along the container bottom 42 to weld the negative electrode second long edges 28 directly to the container bottom 42. Regardless of the specifics of the welding process, it can be performed in a statistical manner so that even if some portions of the the bare first long edges 26a of the positive electrode 26 are not connected, sufficient weld area is achieved to form the required electrical connection between the first current collector 80 and the positive electrode 26.

The second current collector 82 is also formed of the same material as the electrode to which it will be connected. In the illustrated embodiment, since the second current collector 82 will be connected to the negative electrode 28, it is formed of aluminum. In addition, the second current collector 82 is connected to the exposed (bare portions) of the negative electrode 28 by welding, as discussed above with respect to the first current collector 80.

In some embodiments, the cell housing 11 is dimensioned so that when the cell 110 is assembled, the first current collector 80 is urged in the longitudinal direction of the cell against the cell lid 12 via the jelly roll assembly 24, whereby an electrical connection is provided between the positive electrode 26 and the cell cover 12. Similarly, the second current collector 82 is urged in the longitudinal direction of the cell against the container bottom 42 via the the jelly roll assembly 24, whereby an electrical connection is formed between the second electrode 28 and the container 40.

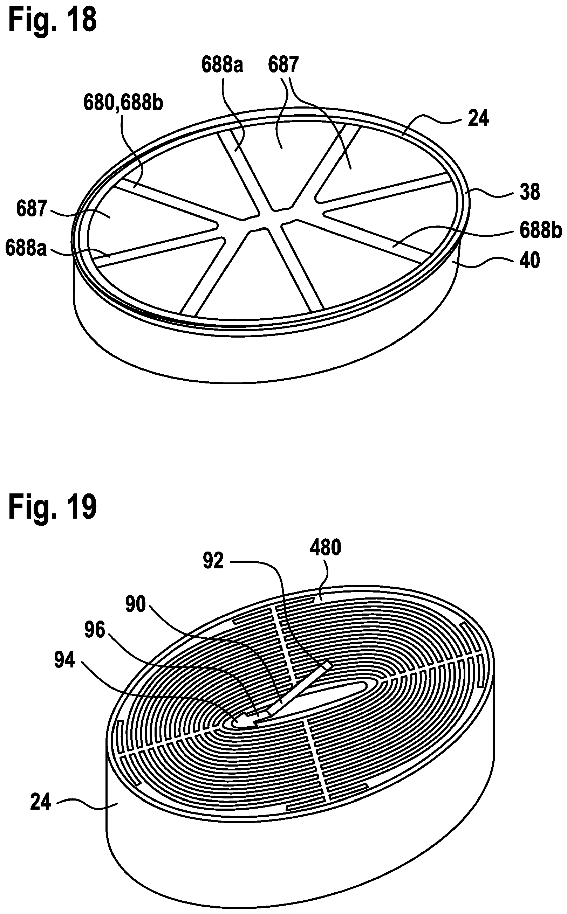

Referring to Fig. 19, in other embodiments, the first and second current collectors 80, 82 (note an alternative embodiment current collector 480, described below, is shown in Fig. 19) include a spring ribbon 90 disposed between each of the first and second current collectors 80, 82 and the cell housing 11 to ensure a positve electrical connection with the cell housing 11. The spring ribbon 90 is an elongated, elastic, electrically-conductive member having a first end 92 and an opposed second end 94 that is wide relative to the first end 92. The spring ribbon 90 has a bend 96 between the first and second ends 92, 94, whereby the first end 92 is not coplanar with the second end 94. In use, the widened second end 94 is welded to an outward facing (e.g., cell housing-facing) surface of the current collector 80, 82. The first end 92 remains free and is spaced apart from the outward facing surface of the current collector 80, 82 due the presence of the bend 96. When the cell 110 is assembled, the first end 92 of the spring ribbon 90 abuts the cell housing 11 while resiliently deflecting toward the current collector 80, 90 to accommodate space requirements within the cell housing 11. Thus, the resilient force of the spring ribbon 90 causes the first end 92 to remain in contact with the cell housing 11, whereby an electrical connection is provided between the respective electrode 26, 28 and the cell housing 11 via the current collectors 80, 82 and spring ribbons 90.

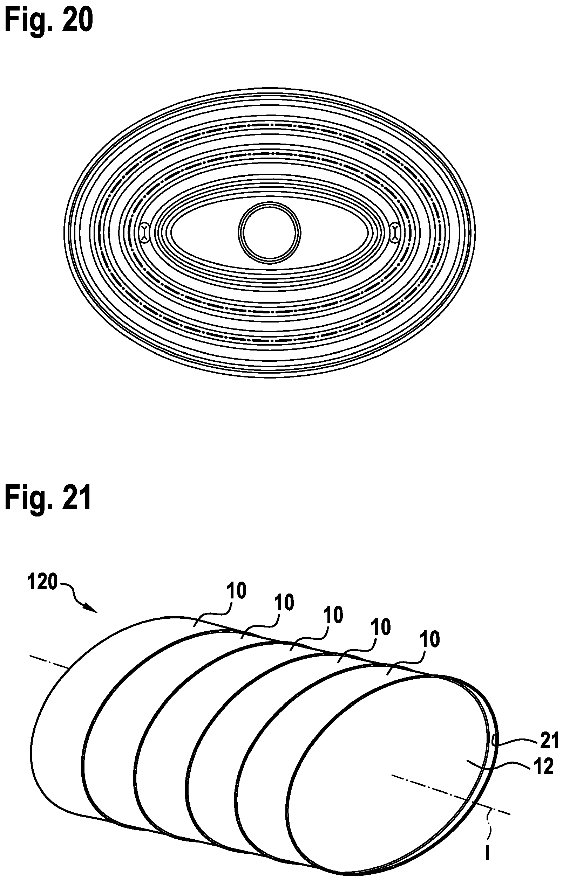

Referring to Fig. 20, in still other embodiments, the conductive wires 70, 72, the current collectors 80, 82 and/or the spring ribbons 90 are omitted from the cell housing 11, and the positive electrode is directly welded to the cell cover 12 and the negative electrode is directly welded to the container bottom 42. For example, cell cover 12 rests on the positive electrode first long edges 26a, and weld spots or lines (for example via induction welding) are performed along the cell cover outer surface. Similar welds are provided along the container bottom 42 to weld the negative electrode second long edges 28 directly to the container bottom 42. Although a pair of circumferential weld lines are illustrated in Fig. 20, the welding amount and pattern are not limited to this embodiment shown. Regardless of the specifics of the welding process, it can be performed in a statistical manner so that even if some portions of the the bare first long edges of the respective electrode 26, 28 are not connected to the cell housing 11, sufficient weld area is achieved to form the required electrical connection between the respective electrode 26, 28 and the cell housing 11.

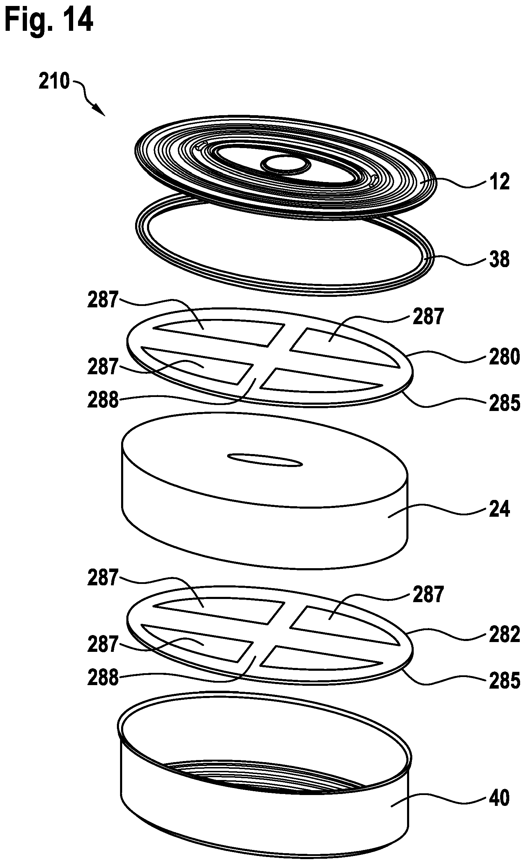

Referring to Fig. 14, another alternative elliptical cell 210 is substantially similar to the cells 10, 110 described above with respect to Figs. 1-13, whereby common reference numbers are used to refer to common elements, and the description of common elements will not be repeated. The elliptical cell 210 differs from the previous embodiments in that it includes an alternative embodiment first current collector 280 disposed between positive electrode 26 and the cell cover 12 to electrically connect the jelly roll assembly 24 to the cell cover 12, and an alternative second current collector 282 disposed between the negative electrode 28 and the containter bottom 42 to electrically connect the jelly roll assembly 24 to the container 40. The first and second current collectors 280, 282 are identical in shape and size, so only the first current collector 280 will be described.

The first current collector 280 is a thin, flat plate having an elliptical peripheral shape that generally corresponds to the peipheral shape of the jelly roll assembly 24 and container bottom 42. Like the current collector shown in Figs. 12 and 13, the first current collector 280 is dimensioned to have a major axis and minor axis length that is slightly shorter than the length of the major axis A1 and minor axis A2 of the container bottom 42, whereby there is no electrical conduction between a peripheral edge 285 of the first current collector 280 and the container sidewall 50.

The first current collector 280 includes four, generally sector-shaped cut outs 287 that pass through the plate thickness. The cut outs 287 are disposed between the major and minor axes, whereby a cross-shaped plate portion 288 extends between the cut outs 287. The cut outs 287 are dimensioned so that approximately 50 percent of the area the first current collector 280 is open. The relatively large open area advantageously facilitates welding since a large area of the bare long edges 26a, 28b of the respective electrode 26, 28 is permitted to extend therein, facilitating the folding and welding connection operations.

The first and second current collectors 280, 282 are each formed of the same material as the electrode to which it will be connected. In some embodiments, the first and second current collectors 280, 282 are connected to the cell housing 11 via spring ribbons 90 (not shown).

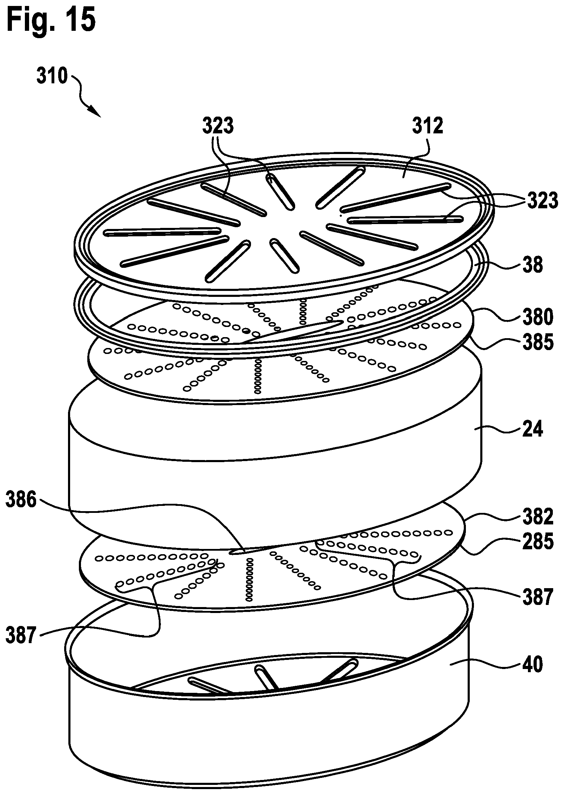

Referring to Fig. 15, another alternative elliptical cell 310 is substantially similar to the cells 10, 110 described above with respect to Figs. 1-13, whereby common reference numbers are used to refer to common elements, and the description of common elements will not be repeated. The elliptical cell 310 differs from the previous embodiments in that it includes an alternative embodiment first current collector 380 disposed between positive electrode 26 and the cell cover 12 to electrically connect the jelly roll assembly 24 to the cell cover 12, and an alternative second current collector 382 disposed between the negative electrode 28 and the containter bottom 42 to electrically connect the jelly roll assembly 24 to the container 40. The first and second current collectors 380, 382 are identical in shape and size, so only the first current collector 380 will be described.

The first current collector 380 is a thin, flat plate having an elliptical peripheral shape that generally corresponds to the peripheral shape of the jelly roll assembly 24 and container bottom 42. Like the current collector 80 shown in Figs. 12 and 13, the first current collector 380 is dimensioned to have a major axis and minor axis length that is slightly shorter than the length of the major axis A1 and minor axis A2 of the container bottom 42, whereby there is no electrical conduction between a peripheral edge 385 of the first current collector 380 and the container sidewall 50.

The first current collector 380 includes an elongated central slot 386 that passes through the plate thickness and extends in parallel to the major axis. In addition, the first current collector 380 includes several several sets of apertures 387 aligned along respective radii so as to provide elongated discontinous radial slots 388 disposed between the central slot 386 and the peripheral edge 385. The aligned sets of apertures 387 extend in a radial direction and are equidstantly spaced about the circumference of the central slot 386.

The first and second current collectors 380, 382 are each formed of the same material as the electrode to which it will be connected. In some embodiments, the first and second current collectors 380, 382 are connected to the cell housing 11 via spring ribbons 90 (not shown).

In addition to the first and second current collectors 380, 382, elliptical cell 310 differs from the previous embodiments in that it includes an alternative embodiment cell cover 312. The cell cover 312 illustrated in Fig. 15 differs from the cell cover 12 illustrated in Figs. 1-11 in that the cell cover 312 includes a series of radially-extending ridges 323 that provide structural reinforcement and facilitate interconnection between adjacent cells 310, 310' when multiple cells are arranged longitudinally in a stack. The ridges 323 of one cell interact with the corresponding ridges of the adjacent cell 10' to reduce relative lateral movement between the cells, thus reducing fretting of the cell housing 11 as well as NVH.

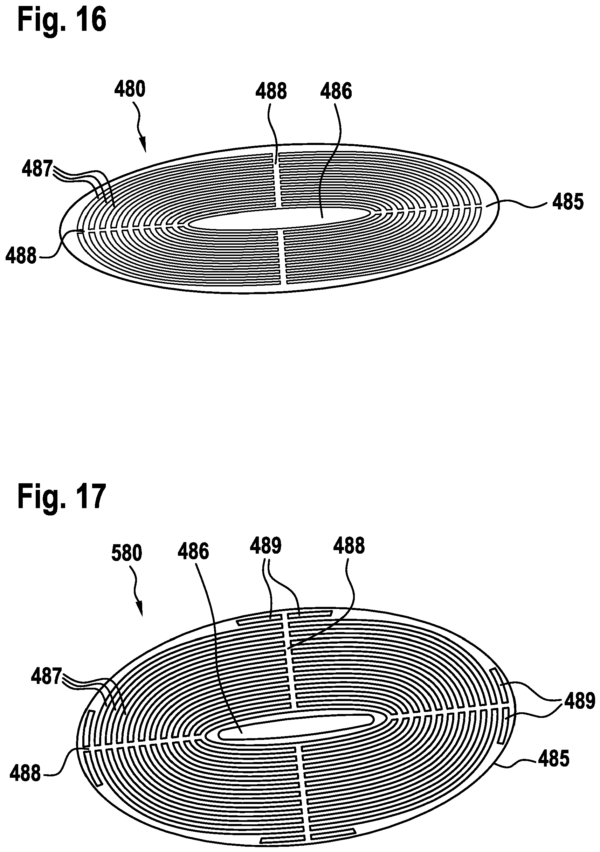

Referring to Figs. 16-18, other alternative current collectors 480, 580, 680 are contemplated. For example, in some embodiments, a current collector 480 (Fig. 16) includes an elongated central slot 486 that passes through the plate thickness and extends in parallel to the major axis. In addition, the current collector 480 includes several circumferentially-extending slots 487 concentric with the central slot 486 and supported by radially extending ribs 488 so as to provide elongated discontinous circumferential slots 487 disposed between the central slot 486 and the peripheral edge 485.

Another embodiment current collector 580 (Fig. 17) is similar to that shown in Fig. 16, and further includes additional, relatively short length circumferentially-extending slots 489 adjacent the major and minor axes, and between the outer most slots 487 and the peripheral edge 485.

Still another embodiment current collector 680 (Fig. 18) is similar to that shown in Fig. 14, since it includes generally sector-shaped cut outs 687 that pass through the plate thickness. The cut outs 687 are disposed between the major and minor axes, whereby a cross-shaped plate portion 688a extends between the cut outs 687. Additional plate portions 688b that extend between the major axis and the periphery are also included to provide additional support. Although there are additional plate portions 688b relative to the embodiment showin in Fig. 14, the plate portions 688a, 688b are relatively smaller in area, so that approximately 50 percent or more of the area the current collector 680 is open.

A battery module 100 will now be described that provides an electrical system. The battery module 100 includes elliptical cells 10 arranged such that the cells 10 are serially electrically connected, the arrangement providing a compact battery system that maximizes the energy (KWh) with respect to weight and volume of the entire battery system.

Referring to Fig. 21, within the battery module 100, multiple cells 10 are stacked along the cell longitudinal axis ℓ such that the recess 22 of the cell cover 12 of one cell 10 receives, supports, and forms an electrical connection with the bottom 42' of an adjacent cell 10'. This arrangement, referred to as a cell stack 120, provides a series of cells 10 that are serially electrically connected. Due to the presence of the rim 21 that defines the recess, relative lateral movement between adjacent cells 10, 10' is minimal. In addition, due to the elliptical shape of the recess 22, relative rotations between adjacent cells 10, 10' about the longitudinal axis is minimal. These features provide a stable electrical connection between adjacent cells 10, 10' and prevents fretting of the cell housing 11.

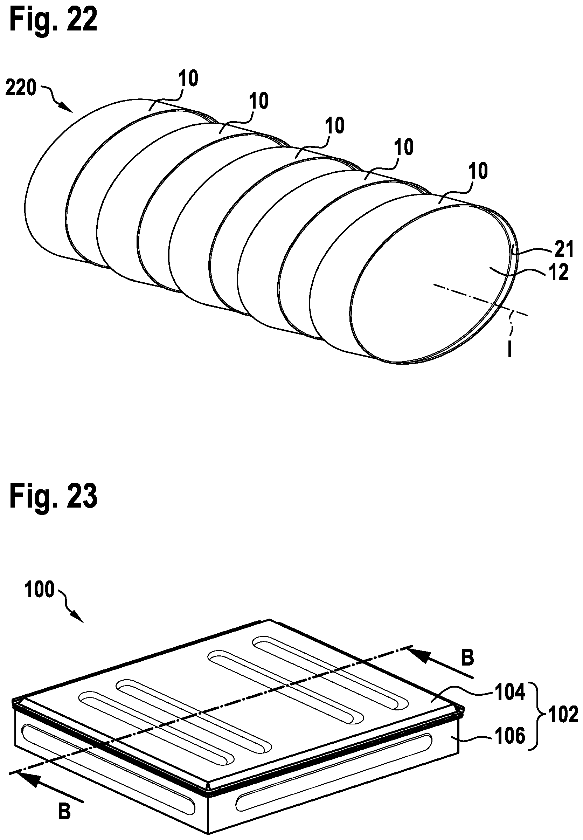

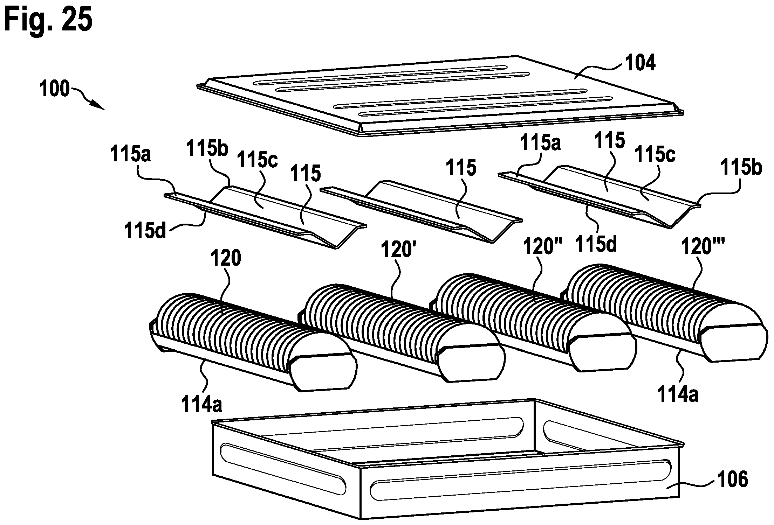

Referring to Figs. 23-25, in addition to the cells 10, the battery module 100 includes a module housing 102, a cell supporting element 114 disposed in the module housing 102 to support the cells 10 within the module housing 102, and electronics supporting elements 115 disposed in the module housing 102 to support sensors, electronic control devices and electrical conductors relative to the cells 10.

The module housing 102 includes a generally rectangular module housing base 106 that defines a rectangular module housing bottom 108 and module housing sidewalls 110 that surround the module housing bottom 108. The module housing 102 also includes a module cover 104 that is sized and dimensioned to close the open end of the module housing base 106. The module cover 104 may be releasably secured to the module housing base 106 by any conventional method.

The cell supporting element 114 rests on the module housing bottom 108 and provides elongated channels 114a having semi- (or nearly semi-) elliptical profiles. The cell supporting element 114 includes several channels 114a arranged in parallel, and each channel 114a is sized and dimensioned to receive and support one of the cell stacks 120. To provide a minimum height battery module 100, the semi-elliptical channels 114a are configured such that the width of the channel 114a corresponds to, at most, the length of the major axis A1 of a cell 10, and the depth of the channel 114a corresponds to, at most, one half the length of the minor axis A2 of a cell 10. As a result, the cell stack 120 is supported within the cell supporting element 114 so that the minor axis A2 of each cell 10 is oriented in the height direction of the battery module 100 and the major axis A1 of each cell is oriented in parallel to the module housing bottom 108.

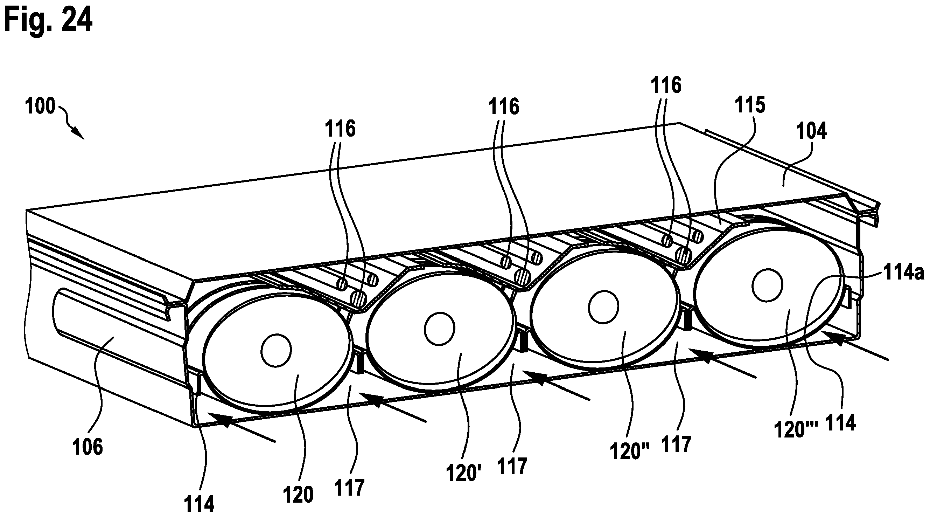

A V-shaped vacancy 117 is formed between adjacent channels 114a that extends between, and along the length of, each cell stack 120. The V-shaped vacancy 117 is used to permit cooling air to circulate through the module housing 102, as shown by the arrows in Fig. 24.

The electronics supporting elements 115 reside between the cell stacks 120 and the module housing cover 104. Each of the electronics supporting elements 115 may be in the form of a flexible foil sheet formed to have a curved profile when seen in edge view.

The curved profile of the electronics supporting element 115 is achieved by forming a fold line 115d along a longitudinally-extending midline of the foil sheet. One side of the fold line provides a first sheet portion 115a that overlies a portion of the cells 10 of a first cell stack 120, and the other side of the fold line provides a second sheet portion 115b that overlies a portion of the cells 10 of an adjacent cell stack 120'. The first sheet portion 115a and the second sheet portion 115b each have a curved shape that conforms the shape of the portion of the cells 10 of the respective cell stack 120, 120'. In the illustrated embodiment, the curved shape correponds to the shape of a quadrant of an ellipse. In addition, the foil sheet includes an intermediate portion 115c that includes the fold line 115d and that joins the first sheet portion 115a to the second sheet portion 115b. The intermediate portion 115c defines an elongated V-shaped channel that extends parallel to the longitudinal axis of the cell stack 120. The V-shaped channel provides additional space for supporting electrical conductors 116 and/or power electronics devices for controlling and monitoring the cells 10 and the module 100 as a whole.

The electronics supporting element 115 supports electrical conductors 116 in multiple ways. For example, the electrical conductors 116 may be formed separately from the foil sheet and then secured thereto. Alternatively, the electrical conductors 116, or additional electrical conductors (not shown) may be formed integrally with the foil sheet such as by printing an electrically conductive pattern on the foil sheet. The electronics supporting element 115 also supports sensors (not shown) and one or more electronic control devices (not shown). For example, the electronics supporting element 115 may position sensors adjacent each cell and provide the electrical connections between the cells 10 and/or the sensors and the electronic control devices. Thus, the cell sensors are arranged to detect properties of one or more of the cells, and the electrically conductuctive paths connect the cell sensors to an electronics control device that monitors an output of the cell sensors. In some embodiments, the electronics supporting element 115 may provide the serial connection between adjacent cell stacks 120, 120'. For example, in some embodiments, an electrically conductive path of the electronics supporting element electrically connects an outer-most cell of one cell stack 120 to an outer-most cell of the adjacent cell stack 120' whereby the one cell stack 120 is serially connected to the adjacent cell stack 120'.

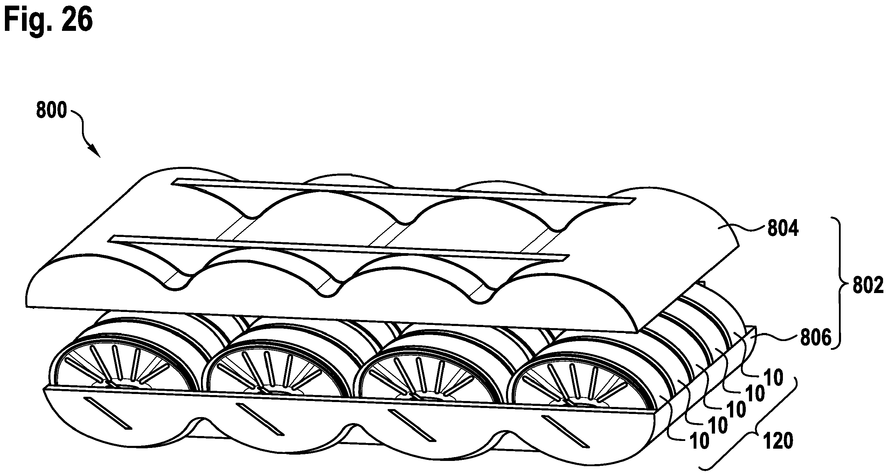

Referring to Fig. 26 an alternative module housing 802 includes a module housing base 806 and a a module housing cover 804 that are substantially similar in shape and dimension. The module housing base and cover 806, 804 are molded elements that each include elongated channels 814 having semi- (or nearly semi-) elliptical profiles. The channels 814 are arranged in parallel, and each channel 814 is sized and dimensioned to receive and support one of the cell stacks 120. To provide a minimum height battery module 800, the semi-elliptical channels 814 are configured such that the width of the channel 814 corresponds to, at most, the length of the major axis A1 of a cell 10, and the depth of the channel 814 corresponds to, at most, one half the length of the minor axis A2 of a cell 10. As a result, the cell stack 120 is supported within the module housing 802 so that the minor axis A2 of each cell 10 is oriented in the height direction of the battery module 800 and the major axis A1 of each cell is oriented in parallel to the module housing base 806. The alternative module housing may include the electronics supporting elements 115 disposed in the module housing 802 to support sensors, electronic control devices and electrical conductors relative to the cells 10. The module cover 804 may be releasably secured to the module housing base 806 by any conventional method.

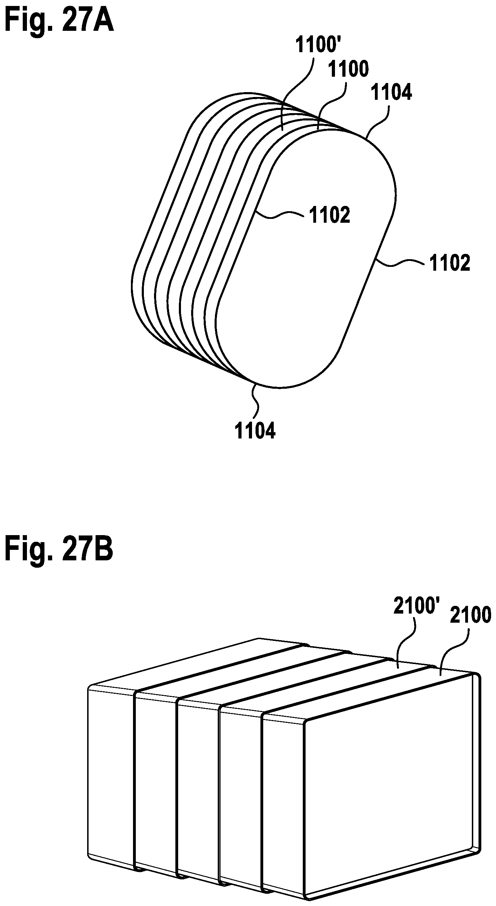

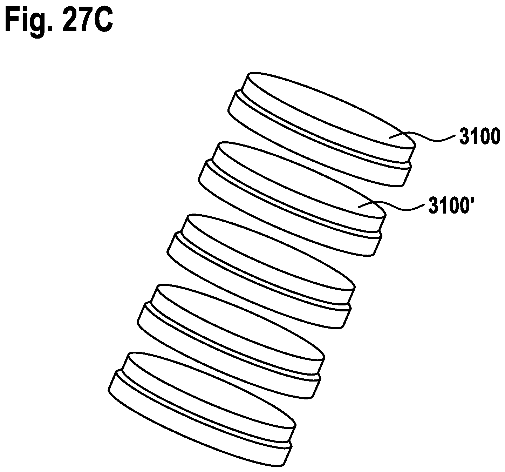

Referring to Figs. 27A-27C, although the cells 10 are described herein as having an elliptically-shaped cell housing 11, the cell housings 11 are not limited to an elliptical shape. For example, in some embodiments, the cell housings 1100 have a race-track shape that includes a pair of opposed flat sides 1102 joined by rounded ends 1104 (Fig. 27A). In another example, the cells housings 2100 have a rectangular shape (Fig. 27B). In still another example, the cell housings 3100 have a circular shape (27C). However, regardless of the peripheral shape, each of the cells 10, 1100, 2100, 3100 have a recess formed in one end that is shaped and dimensioned to receive an end of an adjacent cell 10', 1100', 2100', 3100'. As described above with respect to the cell 10, the recess 22 defines a rim 21 that provides structural reinforcement, facilitates mechanical and electrical interconnection between adjacent cells 10, 10' when multiple cells are arranged longitudinally in a cell stack 120, and provides lateral and rotational stability to a cell stack 120.

Although the container 40 is described herein as including the sidewall 50 that extends normal to the bottom 42, the container 40 may alternatively include a sidewall that is inclined relative to the bottom 42 at an angle greater or less than 90 degrees. In some embodiments, the sidewall has a uniform thickness. In other embodiments, the inclination of the sidewall may be a result of providing the sidewall with a non-uniform thickness.

Athough the electrode set of the jelly roll is described herein as being formed of a coated copper and aluminum strips, other materials may be used to accommodate the requirements of the specific application.

Although the jelly rolly assembly 24 is described as disposed within the cell housing 11 with the positive electrode 26 adjacent the cell cover 12 and the negative electrode 28 adjacent the container bottom 42, with the positive electrode 26 electrically connected to the cell cover 12 and the negative electrode 28 electrically connected to the container bottom 42, the cell 10 is not limited to this configuration. For example, the jelly roll 24 may be disposed within the cell housing 11 with the positive electrode 26 adjacent the container bottom 42 and the negative electrode 28 adjacent the cell cover 12, with the positive electrode 26 electrically connected to the container bottom 42 and the negative electrode 28 electrically connected to the cell cover 12.

In the illustrated embodiment, the container 40 and the cell cover 12 are formed of metal to provide them with the required electrically conductive properties. However, in some embodiments the container 40 and cell cover 12 may be formed of a nonconductive material, and then appropriately coated, plated, or printed with conductive circuits, to provide the required electrically conductive properties.

Although in the illustrated embodiment, the cell cover 12 is hermetically connected to the container sidewall 50 via a crimping process, it is conceived that the cell cover 12 can be hermetically connected to the container sidewall by other methods, such as welding. It is desirable that the method used to connect the cell cover 12 to the container sidewall 50 results in formation of protrusion along the cell cover peripheral edge 14, which in turn results in formation of the recess 22 in the cell cover outer surface 18.

The battery module 100 is described herein as providing an electrical system that includes a serially electrically connected arrangement of cells 10. However, the battery module is not limited to providing a serial connection arrangement. In particular, alternative cell arrangements can be used, including a parallel connection arrangement or a mixed serial and parallel connection arrangement.

Referring to Fig. 22, although the cell stack 120 has been described herein as including a longitudinally stacked and nested arrangement of cells 10, the cell stack is not limited to a nested arrangement. For example, an alternative embodiment cell stack 220 includes cells that are longitudinally spaced apart. In this alternative arrangement, the individual cells 10 of the cell stack 220 are serially connected using electrically conductive elements (not shown) that extend between respective cell housing 11 portions.

Selective illustrative embodiments of the system and device are described above in some detail. It should be understood that only structures considered necessary for clarifying the system and device have been described herein. Other conventional structures, and those of ancillary and auxiliary components of the system and device, are assumed to be known and understood by those skilled in the art. Moreover, while a working example of the system and device have been described above, the system and device are not limited to the working examples described above, but various design alterations may be carried out without departing from the system and device as set forth in the claims.

## Claims

1. A battery module (100) comprising electrochemical cells (10), wherein each electrochemical cell includes
an electrically-conductive cell housing (11) having a container portion (40) having an open end, and a cell cover portion (12) that is secured to the container portion (40) in such a way as to close the open end;
an electrically isolating member (38) disposed between the cell cover portion (12) and the container portion (40); and
an electrically-conductive jelly roll (24) disposed in the cell housing (11), the jelly roll (24) arranged such that a first electrode of the jelly roll (24) is electrically connected to the container portion (40), and second electrode of the jelly roll (24) is electrically connected to the cell cover portion (12),
and wherein
a cell cover portion (12) of the cell housing (11) of one of the electrochemical cells (10) comprising a rim (21) at a peripheral edge (14) of the cell cover portion (12), wherein the rim (21) provides a recess (22) configured to receive a bottom (42) of the cell housing (11) of an adjacent one of the electrochemical cells (10), and
the second end of the cell housing (11) of the adjacent one of the electrochemical cells (10) is received within the recess (22) of the cell housing (11) of the one of the electrochemical cells (10) whereby the housings (11) of the one of the electrochemical cells (10) and the adjacent one of the electrochemical cells (10)
a) fit within each other in a nested arrangement in which the respective cell housings (11) are stacked end to end, and
b) form an electrical connection.

2. The battery module (100) of claim 1, wherein in the recess (22) conforms to the size and shape of the second end of the cell housing (11).

3. The battery module (100) of claim 1, wherein the container portion (40) includes a closed end spaced apart from the cell cover, and the closed end and the cell cover each have an elliptical peripheral shape.

4. The battery module (100) of claim 1, further comprising a module base configured to support a stack of electrochemical cells (10), wherein
the electrochemical cells (10) have an elliptical shape that defines a major axis and a minor axis,
the electrochemical cells (10) are arranged within the module base such that the major axis of each cell is parallel to a bottom support surface of the module (100) base.

5. The battery module (100) of claim 4, wherein the module base supports a first stack of electrochemical cells (10) and a second stack of electrochemical cells (10) arranged within the module base such that the major axis of each cell is parallel to a bottom support surface of the module base, and the first stack of electrochemical cells (10) is parallel to the second stack of electrochemical cells (10).

6. The battery module of claim 5, further comprising a flexible foil sheet (115) including a first portion (115a) that overlies a portion of the cells (10) of the first stack and a second portion (115b) that overlies a portion of the cells (10) of the second stack, the first portion (115a) and the second portion (115b) comprising
a curved shape that conforms the shape of the portion of the cells (10) of the respective stack, and
the flexible foil sheet (115) comprises an electronically conductive path (116) and cell sensors

7. The battery module (100) of claim 5, further comprising a flexible foil sheet (115) including a first portion that overlies a portion of the cells of the first stack and a second portion that overlies a portion of the cells of the second stack, the first portion and the second portion comprising
a curved shape that conforms the shape of the portion of the cells of the respective stack, and
an electrically conductive path that electrically connects an outer-most cell of the first stack to an outer-most cell of the second stack whereby the first stack is serially connected to the second stack , and
the flexible foil sheet (115) comprises an electronically conductive path (116) and cell sensors.

8. The battery module (100) of claim 5, further comprising a flexible foil sheet (115) including a first portion that overlies a portion of the cells of the first stack and a second portion that overlies a portion of the cells of the second stack, the first portion and the second portion comprising
a curved shape that conforms the shape of the portion of the cells of the respective stack,
the cell sensors are arranged to detect properties of the cells (10), and
the electrically conductive paths (116) are arranged to connect the cell sensors to a control unit that monitors an output of the cell sensors.

9. The battery module (100) of claim 5, further comprising flexible foil sheet (115) including
a first portion (115a) defining a first cuved portion that overlies a portion of the cells of the first stack and conforms the shape of the portion of the cells (10) of the first stack,
a second portion (115b) defining a second curved portion that overlies a portion of the cells of the second stack and conforms the shape of the portion of the cells (10) of the first stack, and
an intermediate portion (115c) that joins the first portion to the second portion, the intermediate portion defining an elongated V-shaped channel that extends parallel to the first stack.

## Patentansprüche

1. Batteriemodul (100), das elektrochemische Zellen (10) umfasst, wobei jede elektrochemische Zelle aufweist:
ein elektrisch leitfähiges Zellengehäuse (11), das einen Behälterabschnitt (40), der ein offenes Ende aufweist, und einen Zellenabdeckabschnitt (12) aufweist, der an dem Behälterabschnitt (40) so befestigt ist, dass er das offene Ende verschließt;
ein elektrisch isolierendes Element (38), das zwischen dem Zellenabdeckabschnitt (12) und dem Behälterabschnitt (40) angebracht ist; und
einen elektrisch leitfähigen Elektrodenwickel (Jelly-Roll) (24), der in dem Zellengehäuse (11) angebracht ist, wobei der Elektrodenwickel (24) so angeordnet ist, dass eine erste Elektrode des Elektrodenwickels (24) mit dem Behälterabschnitt (40) elektrisch verbunden ist, und dass eine zweite Elektrode des Elektrodenwickels (24) mit dem Zellenabdeckabschnitt (12) elektrisch verbunden ist,
und wobei:
ein Zellenabdeckabschnitt (12) des Zellengehäuses (11) von einer der elektrochemischen Zellen (10) einen Kranz (21) an einem Umfangsrand (14) des Zellenabdeckabschnitts (12) umfasst, wobei der Kranz (21) eine Vertiefung (22) bereitstellt, um einen Boden (42) des Zellengehäuses (11) einer benachbarten Zelle der elektrochemischen Zellen (10) aufzunehmen, und
das zweite Ende des Zellengehäuses (11) der benachbarten Zelle der elektrochemischen Zellen (10) innerhalb der Vertiefung (22) des Zellengehäuses (11) der Einen der elektrochemischen Zellen (10) aufgenommen wird, wodurch die Gehäuse (11) der Einen der elektrochemischen Zellen (10) und der Benachbarten der elektrochemischen Zellen (10):
a) in einer geschachtelten Anordnung ineinanderpassen, in der die jeweiligen Zellengehäuse (11) lückenlos gestapelt sind, und
b) eine elektrische Verbindung bilden.

2. Batteriemodul (100) nach Anspruch 1, wobei die Vertiefung (22) an die Größe und Form des zweiten Endes des Zellengehäuses (11) angepasst ist.

3. Batteriemodul (100) nach Anspruch 1, wobei der Behälterabschnitt (40) ein geschlossenes Ende aufweist, das von der Zellenabdeckung beabstandet ist, und wobei das geschlossene Ende und die Zellenabdeckung jeweils eine elliptische Umfangsform aufweisen.

4. Batteriemodul (100) nach Anspruch 1, das außerdem ein Modulunterteil umfasst, der konfiguriert ist zum Tragen des Stapels elektrochemischer Zellen (10), wobei:
die elektrochemischen Zellen (10) eine elliptische Form aufweisen, die eine Hauptachse und eine Nebenachse definiert,
die elektrochemischen Zellen (10) innerhalb des Modulunterteils so angeordnet sind, dass die Hauptachse von jeder Zelle parallel zu einer Bodenträgerfläche des Unterteils des Moduls (100) ist.

5. Batteriemodul (100) nach Anspruch 4, wobei das Modulunterteil einen ersten Stapel elektrochemischer Zellen (10) und einen zweiten Stapel elektrochemischer Zellen (10) trägt, die in dem Modulunterteil so angeordnet sind, dass die Hauptachse von jeder Zelle parallel zu einer Bodenträgerfläche des Modulunterteils ist, und dass der erste Stapel elektrochemischer Zellen (10) parallel zu dem zweiten Stapel elektrochemischer Zellen (10) ist.

6. Batteriemodul nach Anspruch 5, das außerdem eine flexible Folienbahn (115) umfasst, die einen ersten Abschnitt (115a), der einen ersten Abschnitt der Zellen (10) des ersten Stapels überlagert, und einen zweiten Abschnitt (115b) aufweist, der einen Abschnitt der Zellen (10) des zweiten Stapels überlagert, wobei der erste Abschnitt (115a) und der zweite Abschnitt (115b) umfassen:
eine gekrümmte Form, die an die Form des Abschnitts der Zellen (10) des jeweiligen Stapels angepasst ist, und
wobei die flexible Folienbahn (115) einen elektronisch leitfähigen Pfad (116) und Zellensensoren umfasst.

7. Batteriemodul (100) nach Anspruch 5, das außerdem eine flexible Folienbahn (115) umfasst, die einen ersten Abschnitt, der einen ersten Abschnitt der Zellen des ersten Stapels überlagert, und einen zweiten Abschnitt aufweist, der einen Abschnitt der Zellen des zweiten Stapels überlagert, wobei der erste Abschnitt und der zweite Abschnitt umfassen:
eine gekrümmte Form, die an die Form des Abschnitts der Zellen des jeweiligen Stapels angepasst ist, und
einen elektrisch leitfähigen Pfad, der eine am weitesten außen liegende Zelle des ersten Stapels mit einer am weitesten außen liegende Zelle des zweiten Stapels elektrisch verbindet, wodurch der erste Stapel und der zweite Stapel in Reihe geschaltet werden, und
wobei die flexible Folienbahn (115) einen elektronisch leitfähigen Pfad (116) und Zellensensoren umfasst.

8. Batteriemodul (100) nach Anspruch 5, das außerdem eine flexible Folienbahn (115) umfasst, die einen ersten Abschnitt, der einen Abschnitt der Zellen des ersten Stapels überlagert, und einen zweiten Abschnitt aufweist, der einen Abschnitt der Zellen des zweiten Stapels überlagert, wobei der erste Abschnitt und der zweite Abschnitt umfassen:
eine gekrümmte Form, die an die Form des Abschnitts der Zellen des jeweiligen Stapels angepasst ist,
wobei die Zellensensoren geeignet sind, um die Eigenschaften der Zellen (10) zu erkennen, und
wobei die elektrisch leitfähigen Pfade (116) geeignet sind, um die Zellensensoren mit einer Steuereinheit zu verbinden, die einen Ausgang der Zellensensoren überwacht.

9. Batteriemodul (100) nach Anspruch 5, das außerdem eine flexible Folienbahn (115) umfasst, die aufweist:
einen ersten Abschnitt (115a), der einen ersten gekrümmten Abschnitt definiert, der einen Abschnitt der Zellen des ersten Stapels überlagert und an die Form des Abschnitts der Zellen (10) des ersten Stapels angepasst ist,
einen zweiten Abschnitt (115b), der einen zweiten gekrümmten Abschnitt definiert, der einen Abschnitt der Zellen des zweiten Stapels überlagert und an die Form des Abschnitts der Zellen (10) des ersten Stapels angepasst ist, und
einen Zwischenabschnitt (115c), der den ersten Abschnitt mit dem zweiten Abschnitt verbindet, wobei der Zwischenabschnitt einen lang gestreckten V-förmigen Kanal definiert, der sich parallel zu dem ersten Stapel erstreckt.

## Revendications

1. Module de batterie (100) comprenant des cellules électrochimiques (10), chaque cellule électrochimique contenant
un boîtier de cellule électriquement conducteur (11) possédant une partie conteneur (40) ayant une extrémité ouverte, et une partie capot de cellule (12) qui est fixée sur la partie conteneur (40) de façon à fermer l'extrémité ouverte ;
un élément électriquement isolant (38) disposé entre la partie capot de cellule (12) et la partie conteneur (40) ; et
un cylindre de gelée électriquement conductrice (24) disposé dans le boîtier de cellule (11), le cylindre de gelée (24) étant agencé de telle façon qu'une première électrode du cylindre de gelée (24) soit reliée électriquement à la partie conteneur (40) et qu'une deuxième électrode du cylindre de gelée (24) soit reliée électriquement à la partie capot de cellule (12),
et dans lequel
une partie capot de cellule (12) du boîtier de cellule (11) d'une des cellules électrochimiques (10) comprend un rebord (21) situé sur un bord périphérique (14) de la partie capot de cellule (12), le rebord (21) formant un renfoncement (22) configuré pour recevoir un fond (42) du boîtier de cellule (11) d'une cellule adjacente faisant partie des cellules électrochimiques (10), et
la deuxième extrémité du boîtier de cellule (11) de la cellule adjacente faisant partie des cellules électrochimiques (10) est reçue à l'intérieur d'un renfoncement (22) du boîtier de cellule (11) d'une des cellules électrochimiques (10), moyennant quoi les boîtiers (11) d'une des cellules électrochimiques (10) et de la cellule adjacente faisant partie des cellules électrochimiques (10)
a) se logent les uns dans les autres selon une disposition emboîtée dans laquelle les boîtiers de cellule (11) respectifs sont empilés par les extrémités, et
b) forment une connexion électrique.

2. Module de batterie (100) selon la revendication 1, dans lequel le renfoncement (22) prend la taille et la forme de la deuxième extrémité du boîtier de cellule (11).

3. Module de batterie (100) selon la revendication 1, dans lequel la partie conteneur (40) contient une extrémité fermée espacée du capot de cellule, l'extrémité fermée et le capot de cellule ayant chacun une forme périphérique elliptique.

4. Module de batterie (100) selon la revendication 1, comprenant également une base de module configurée pour soutenir une pile de cellules électrochimiques (10), dans lequel
les cellules électrochimiques (10) ont une forme elliptique qui définit un grand axe et un petit axe,
les cellules électrochimiques (10) sont agencées à l'intérieur de la base de module de telle façon que le grand axe de chaque cellule soit parallèle à une surface de support inférieure de la base du module (100).

5. Module de batterie (100) selon la revendication 4, dans lequel la base de module supporte une première pile de cellules électrochimiques (10) et une deuxième pile de cellules électrochimiques (10) agencées à l'intérieur de la base de module de telle façon que le grand axe de chaque cellule soit parallèle à une surface de support de fond de la base de module, et que la première pile de cellules électrochimiques (10) soit parallèle à la deuxième pile de cellules électrochimiques (10).

6. Module de batterie selon la revendication 5, comprenant également une feuille de matériau souple (115) contenant une première partie (115a) qui recouvre une partie des cellules (10) de la première pile et une deuxième partie (115b) qui recouvre une partie des cellules (10) de la deuxième pile, la première partie (115a) et la deuxième partie (115b) comprenant
une forme incurvée qui prend la forme de la partie des cellules (10) de la pile respective, et
la feuille de matériau souple (115) comprenant un chemin électroniquement conducteur (116) et des capteurs de cellule.

7. Module de batterie (100) selon la revendication 5, comprenant également une feuille de matériau souple (115) contenant une première partie qui recouvre une partie des cellules de la première pile et une deuxième partie qui recouvre une partie des cellules de la deuxième pile, la première partie et la deuxième partie comprenant
une forme incurvée qui prend la forme de la partie des cellules de la pile respective, et
un chemin électroniquement conducteur qui relie électriquement une cellule la plus extérieure de la première pile à une cellule la plus extérieure de la deuxième pile, moyennant quoi la première cellule est reliée en série à la deuxième pile, et
la feuille de matériau souple (115) comprenant un chemin électroniquement conducteur (116) et des capteurs de cellule.

8. Module de batterie (100) selon la revendication 5, comprenant également une feuille de matériau souple (115) contenant une première partie qui recouvre une partie des cellules de la première pile et une deuxième partie qui recouvre une partie des cellules de la deuxième pile, la première partie et la deuxième partie comprenant
une forme incurvée qui prend la forme de la partie des cellules de la pile respective,
les capteurs de cellule étant agencés pour détecter des propriétés des cellules (10), et
les chemins électroniquement conducteurs (116) étant agencés pour relier les capteurs de cellule à une unité de commande qui surveille une sortie des capteurs de cellule.

9. Module de batterie (100) selon la revendication 5, comprenant également une feuille de matériau souple (115) contenant
une première partie (115a) définissant une première partie incurvée qui recouvre une partie des cellules de la première pile et prend la forme de la partie des cellules (10) de la première pile,
une deuxième partie (115b) définissant une deuxième partie incurvée qui recouvre une partie des cellules de la deuxième pile et prend la forme de la partie des cellules (10) de la première pile, et
une partie intermédiaire (115c) qui réunit la première partie à la deuxième partie, la partie intermédiaire définissant un canal allongé en forme de V qui s'étend parallèlement à la première pile.
